# EUROPÄISCHE PATENTANMELDUNG

(11) **EP 1 983 333 A2**
(43) Veröffentlichungstag der Anmeldung: **22.10.2008**
(21) Anmeldenummer: 08004128.8
(22) Anmeldetag: 06.03.2008
(51) Int. Cl.: G01N 21/90

(54) **Inspektionsvorrichtung zum Untersuchen von Behältnisverschlüssen**

(30) Priorität: 19.04.2007 DE 102007018870
(71) Anmelder: KRONES AG, 93073 Neutraubling (DE)
(72) Erfinder: Kwirandt, Rainer, Dr., 93092 Barbing (DE); Schlieper, Ulrich, 93191 Rettenbach (DE)

(57) **Zusammenfassung**

Die Erfindung betrifft eine Inspektionsvorrichtung (1) zum Untersuchen von Behältnisverschlüssen (10) mit einer Beleuchtungseinrichtung (4) die oberhalb der zu untersuchenden Behältnisverschlüsse (10) angeordnet ist und die Behältnisverschlüsse beleuchtet, mit einer oberhalb der zu untersuchenden Behältnisverschlüsse (10) angeordneten Bildaufnahmeeinrichtung (2), die von der Beleuchtungseinrichtung (4) auf die Behältnisverschlüsse (10) gerichtete und von den Behältnisverschlüssen (10) zurückgeworfene Strahlung aufnimmt, und ein ortsaufgelöstes Bild der Behältnisverschlüsse ausgibt. Erfindungsgemäß ist der Abstand zwischen der Bildaufnahmeeinrichtung (2) und dem zu untersuchenden Behältnisverschluss (10) geringer ist als die zehnfache Höhe des Behältnisverschlusses (10) und die Bildaufnahmeeinrichtung (2) weist ein Objektiv (8) auf, welches eine Brennweite von weniger als 10mm aufweist.

## Beschreibung

Die vorliegende Erfindung bezieht sich auf eine Inspektionsvorrichtung zum Untersuchen von Behältnisverschlüssen. Aus dem Stand der Technik sind insbesondere im Bereich der Getränkeindustrie diverse Vorrichtungen zum Untersuchen von Behältnissen bekannt. Diese Vorrichtungen untersuchen beispielsweise die Außenwandung oder die Mündung der Behältnisse auf Fehler. Daneben ist es jedoch erforderlich, nicht nur die Behältnisse selbst, sondern auch deren Verschlüsse auf Fehler hin zu untersuchen. So ist es beispielsweise möglich, dass derartige Behältnisverschlüsse einen Querschnitt aufweisen, der von einem bestimmten Sollquerschnitt, beispielsweise einen kreisförmigen Querschnitt, abweicht. Auch ist es möglich, dass ein Sicherungsring, der üblicherweise an derartigen Behältnisverschlüssen angeordnet ist, beschädigt ist.

Die Untersuchung von Behältnisverschlüssen ist jedoch mit einer Vielzahl von Problemen verbunden. Einerseits weisen die Behältnisverschlüsse die unterschiedlichsten Farben auf, die von weiß über Farben wie rot und grün bis hin zu schwarz reichen. Damit wird eine optische Untersuchung erschwert, da die entsprechenden Behältnisverschlüsse Licht in unterschiedlicher Intensität reflektieren. Weiterhin weisen derartige Behältnisverschlüsse auch des Öfteren in ihrem Inneren Schutzfolien, beispielsweise aus Aluminium, auf, die sehr stark reflektieren und damit eine Beobachtung erschweren.

Aus der US 4,924,107 ist eine Vorrichtung zum Inspizieren der Innenflächen eines Behältnisses bekannt. Diese Vorrichtung weist eine Kamera auf, die die Innenfläche eines Behältnisses beobachtet. Weiterhin ist auch ein Beleuchtungsmittel vorgesehen, um den Innenraum des Objektes zu beleuchten.

Diese Vorrichtung arbeitet zufriedenstellend für Behältnisse, ist jedoch für Behältnisverschlüsse unterschiedlicher Färbungen nicht geeignet, da die bei der Beobachtung entstehenden Reflexe nicht hinreichend unterdrückt werden können.

Aus der DE 19 852 369 C1 ist eine Vorrichtung und ein Verfahren zur Prüfung zylindrischer Prüflinge bekannt. Bei diesem Verfahren werden die zu untersuchenden Objekte durchleuchtet und mithilfe einer Kamera ein Transmissionsbild der Prüflinge aufgenommen. Diese Vorrichtung ist jedoch für nicht transparente Gegenstände, wie die zu prüfenden nicht transparenten Behältnisverschlüsse, ungeeignet.

Der vorliegenden Erfindung liegt daher die Aufgabe zugrunde, eine Vorrichtung zum Untersuchen von Behältnisverschlüssen zu schaffen, welche einerseits eine Untersuchung von Behältnisverschlüssen verschiedenster Farben erlaubt und andererseits auch eine Unterdrückung von störenden Reflexen des Behältnisverschlusses selbst oder auch einer Transporteinrichtung für die Behältnisverschlüsse unterdrückt. Dabei sollen etwaige Fehler der Behältnisverschlüsse in dem jeweiligen auszuwertenden Bild gut sichtbar dargestellt werden.

Weiterhin soll eine Untersuchung der Behältnisverschlüsse auch bei relativ hohen Transportgeschwindigkeiten der Verschlüsse und mit zufrieden stellender Auflösung erreicht werden. Schließlich sollte auch der Aufwand, beispielsweise die Anzahl an einzusetzenden Kameras, möglichst gering sein.

Dies wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Inspektionsvorrichtung zum Untersuchen von Behältnissen weist eine Beleuchtungseinrichtung aufweist, die oberhalb der zu untersuchenden Behältnisverschlüsse angeordnet ist und die Behältnisverschlüsse beleuchtet. Weiterhin ist oberhalb der zu untersuchenden Behältnisverschlüsse auch eine Bildaufnahmeeinrichtung angeordnet, die die von der Beleuchtungseinrichtung auf die Behältnisverschlüsse gerichtete und von den Behältnisverschlüssen zurückgeworfene Strahlung aufnimmt und ein ortsaufgelöstes Bild der Behältnisverschlüsse ausgibt. Erfindungsgemäß ist der Abstand zwischen der Bildaufnahmeeinrichtung und dem jeweiligen zu untersuchenden Behältnisverschluss geringer als die zehnfache Höhe des Behältnisverschlusses und die Bildaufnahmeeinrichtung weist ein Objektiv auf, welches eine Brennweite von weniger als 10 mm aufweist.

Bei der Bildaufnahmeeinrichtung handelt es sich insbesondere um eine Kamera und besonders bevorzugt um eine Farbkamera, die ein ortsaufgelöstes Bild aufnimmt. Im Gegensatz zu dem oben zitierten Stand der Technik wird bei der vorliegenden Erfindung nicht in Transmission sondern in Reflektion beobachtet. Genauer gesagt, wird das Bild des Behältnisverschlusses in Reflektion aufgenommen.

Erfindungsgemäß befindet sich die Kamera in einem sehr geringen Abstand zu dem Behältnisverschluss und es wird zur Beobachtung ein Objektiv mit einer geringen Brennweite bzw. ein Weitwinkelobjektiv verwendet. Bevorzugt ist der Abstand zwischen der Bildaufnahmeeinrichtung und dem zu untersuchenden Behältnisverschluss bzw. dessen Oberkante geringer als die achtfache Höhe des Behältnisverschlusses und besonders bevorzugt geringer als die vierfache Höhe des Behältnisverschlusses. Damit wird erfindungsgemäß, wie gesagt, ein starkes Weitwinkelobjektiv eingesetzt und damit werden bewusst die Nachteile, die mit einem derartigen extremen Weitwinkelobjektiv verbunden sind, d.h. insbesondere auftretende Verzerrungen an den Rändern des Bildes in Kauf genommen. Durch die Verwendung dieses Weitwinkelobjektivs kombiniert mit dem sehr geringen Abstand zu den zu beobachtenden Objekt kann jedoch eine hohe Lichtausbeute erreicht werden und damit können auch problematische Verschlüsse, insbesondere dunkle Verschlüsse, zufriedenstellend aufgenommen werden.

Bei einer weiteren erfindungsgemäßen Ausgestaltung ist der Abstand zwischen dem Behältnisverschluss und der Bildaufnahmeeinrichtung kleiner als 100 mm, bevorzugt kleiner als 80 mm, bevorzugt kleiner als 50 mm und besonders bevorzugt kleiner 27 mm. Die genaue Bemessung dieses Abstandes hängt jedoch auch von der Geometrie des Behältnisverschlusses ab.

Somit kann die Seitenwand eines Behältnisverschlusses mit einem kurzbrennweitigem Objektiv und einem geringen Abstand vollumfänglich inspiziert werden. Dabei beleuchtet beispielsweise eine flache Lichteinstrahlung die Seitenwände gut aus, aber besonders bei hohen Deckeln gelangt nur ungenügend Licht an den jeweiligen Boden des Behältnisverschlusses.

Bei größeren Einstrahlwinkeln wird zwar auch der Boden des Behältnisverschlusses besser beleuchtet, in diesem Fall treten aber auch vermehrt Reflexe auf.

Bevorzugt trifft die Strahlung gegenüber einer Symmetrieachse des Behältnisverschlusses unter einem Winkel auf diesen auf, der größer ist als 10°und bevorzugt größer als 20° ist.

Bevorzugt kann zur Beleuchtung des Behältnisverschlusses Licht unterschiedlicher Farben bzw. Wellenlänge verwendet werden. So kann beispielsweise durch die Verwendung von grünem Licht bei einem grünen Behältnisverschluss ein guter Kontrast erreicht werden. Eine Aufnahme mit beispielsweise rotem Licht an einem roten Behältnisverschluss kann ebenfalls eine günstige Helligkeit und einen günstigen Kontrast liefern. Auch ist es möglich, durch die speziell angepasste Beleuchtungsvorrichtung etwaige Schäden des Qualitätsbandes an dem Behältnisverschluss erkennbar zu machen.

Es wäre jedoch auch möglich, Licht in einer Farbe zu verwenden, die nicht mit der Farbe des jeweiligen Behältnisverschlusses übereinstimmt, beispielsweise rotes Licht zur Untersuchung eines grünen Behältnisverschlusses. Bei dieser Vorgehensweise kann der Kontrast zwischen dem Behältnisverschluss und dem Hintergrund verändert und auch die Bildhelligkeit reduziert werden. Die Reflexe und insbesondere Reflexe von den Rändern des Behältnisverschlusses treten hier möglicherweise stärker hervor.

In einer bevorzugten Ausführungsform weist die Inspektionsvorrichtung eine Steuerungseinrichtung auf, die bewirkt, dass die Bildaufnahmeeinrichtung in demjenigen Zeitpunkt ein Bild von dem Behältnisverschluss aufnimmt, in dem der Behältnisverschluss direkt unterhalb der Bildaufnahmeeinrichtung angeordnet ist.

Unter einer Anordnung direkt unterhalb der Bildaufnahmeeinrichtung wird verstanden, dass eine Symmetrieachse der Bildaufnahmeeinrichtung und Symmetrieachse des Behältnisverschlusses gegeneinander um weniger als 5 mm, bevorzugt um weniger 2 mm und besonders bevorzugt um weniger als 1,5 mm verschoben sind.

Wie oben erwähnt, wird bei der Beobachtung ein Objektiv mit sehr kurzer Brennweite verwendet und in Folge der Verwendung dieses Objektivs ist das Bild zu seinen Rändern hin mehr oder weniger stark verzerrt. Aus diesem Grunde ist es vorteilhaft, das Bild genau in dem Augenblick aufzunehmen, in dem der Behältnisverschluss direkt unter der Bildaufnahmeeinrichtung angeordnet ist.

Bei einer weiteren vorteilhaften Ausführungsform ist in dem Strahlengang zwischen der Beleuchtungseinrichtung und dem Behältnisverschluss eine erste Polarisationsfiltereinrichtung angeordnet.

Wie oben erwähnt, treten an unterschiedlichen Behältnisverschlüssen eine Vielzahl von Reflexen auf und auch die Führungseinrichtung dieser Behältnisverschlüsse reflektiert oder streut unter Umständen das auf sie eintreffende Licht. Durch die Verwendung der Polarisationsfiltereinrichtung können derartige störende Reflexe teilweise unterdrückt werden.

Bei einer weiteren vorteilhaften Ausführungsform ist in dem Strahlengang zwischen dem Behältnisverschluss und der Bildaufnahmeeinrichtung eine zweite Polarisationsfiltereinrichtung vorgesehen. Die Kombination der ersten und der zweiten Polarisationsfiltereinrichtung, wobei die erste Polarisationsfiltereinrichtung in dem optischen Strahlengang vor dem zu untersuchenden Behältnis und die zweite Polarisationsfiltereinrichtung in dem Strahlengang nach dem zu untersuchenden Behältnisverschluss angeordnet ist, erlaubt in besonders günstiger Weise die Unterdrückung von störenden Reflexen. Besonders bevorzugt ist die zweite Polarisationsfiltereinrichtung, d. h. diejenige Polarisationseinrichtung, die an der Bildaufnahmeeinrichtung angeordnet ist, verstellbar.

Es wäre jedoch auch möglich, dass die erste Polarisationsfiltereinrichtung, die sich bevorzugt an der Beleuchtungseinrichtung befindet, verstellbar ist.

Bei einer weiteren vorteilhaften Ausführungsform ist in dem Strahlengang zwischen der Beleuchtungseinrichtung und dem Behältnisverschluss eine (Fresnel-) Linse vorgesehen. Solche Linsen weisen eine extrem kurze Brennweite auf. Zwar ist die optische Qualität derartiger Linsen oft weniger günstig, da jedoch diese Linse lediglich zum Beleuchten eingesetzt wird, kann dieser Nachteil in Kauf genommen werden.

Bei einer bevorzugten Ausführungsform weist die Beleuchtungseinrichtung eine Vielzahl von Lichtquellen auf, die in Umfangsrichtung um die Bildaufnahmeeinrichtung angeordnet sind. Besonders bevorzugt sind dabei diese Lichtquellen oberhalb der Bildaufnahmeeinrichtung angeordnet. Durch die spezielle Anordnung ist die gleichmäßige Beleuchtung des Behältnisverschlusses bzw. auch dessen Seitenwänden von allen Seiten möglich. Besonders bevorzugt sind die einzelnen Lichtquellen symmetrisch bezüglich der Achse der Bildaufnahmeeinrichtung und damit auch bezüglich des zu beobachtenden Behältnisverschlusses vorgesehen.

Bei einer weiteren vorteilhaften Ausführungsform ist unterhalb der Behältnisverschlüsse eine vorteilhafterweise strukturlose bzw. homogene Hintergrundfläche angeordnet. Diese Hintergrundfläche bewirkt, dass eine kontrastreiche Aufnahme des jeweiligen Behältnisverschlusses möglich ist.

Die vorliegende Erfindung ist weiterhin auf eine Inspektionsanordnung für Behältnisverschlüsse gerichtet, wobei diese Inspektionsanordnung wenigstens eine Inspektionsvorrichtung der oben beschriebenen Art aufweist sowie eine Transporteinrichtung, welche die Behältnisverschlüsse gegenüber der Inspektionsvorrichtung bewegt.

Vorteilhafterweise weist die Inspektionsanordnung eine Führungsschiene auf, entlang derer die Behältnisverschlüsse vereinzelt geführt werden.

In einer weiteren vorteilhaften Ausführungsform weist die Inspektionsanordnung wenigstens zwei Führungsträger (im Folgenden auch als Sägezahnring bezeichnet) auf, der wenigstens zeitweise an den unterschiedlichen Bereichen des Behältnisverschlusses anliegen. So ist es auch möglich, dass ein derartiger Führungsträger an einem ersten Bereich anliegt und eine weiterer Führungsträger an einem zweiten, beispielsweise höheren Bereich, um auf diese Weise zu erreichen, dass möglichst wenige Führungselemente die Bildaufnahme erschweren.

Bei der vorteilhaften Ausführungsform sind die betreffenden Führungsträger dunkel oder schwarz gefärbt. Durch diese Färbung kann der Entstehung von ungewollten Reflexen entgegen gewirkt werden.

Die vorliegende Erfindung ist weiterhin auf eine Inspektionsanordnung zum Inspizieren von Behältnissen gerichtet, wobei diese Inspektionsanordnung eine Inspektionsvorrichtung zum Untersuchen von Behältnisverschlüssen mit einer Beleuchtungseinrichtung aufweist, die oberhalb der zu untersuchenden Behältnisverschlüsse angeordnet ist und die Behältnisverschlüsse beleuchtet. Weiterhin weist die Inspektionsvorrichtung eine oberhalb der zu untersuchenden Behältnisverschlüsse angeordnete Bildaufnahmeeinrichtung auf, die von der Beleuchtungseinrichtung auf die Behältnisverschlüsse gerichtete und von den Behältnisverschlüssen zurückgeworfene Strahlung aufnimmt und ein ortsaufgelöstes Bild der Behältnisverschlüsse ausgibt. Erfindungsgemäß weist diese Inspektionsanordnung eine Transporteinrichtung auf, welche die Behältnisverschlüsse vereinzelt gegenüber der Inspektionsvorrichtung bewegt.

Vorzugsweise weist diese Inspektionsanordnung eine Stangenführung auf, wobei in dem Bereich der Inspektionsvorrichtung oberhalb der Behältnisverschlüsse keine Stangen angeordnet sind. Bei einer weiteren vorteilhaften Ausführungsform weist die Inspektionsanordnung ein Führungsrad auf, welches an seinem Außenumfang eine Vielzahl von Ausnehmungen aufweist, in denen die zu untersuchenden Behältnisverschlüsse anordenbar sind. Mit diesen Ausführungsformen kann erreicht werden, dass die jeweiligen Behältnisverschlüsse mit hoher Präzision an der Inspektionsvorrichtung vorbeigeführt werden und damit auch in einem korrekten Zeitraum ein Bild der Behältnisverschlüsse aufgenommen wird. Bevorzugt ist die Inspektionsvorrichtung in der oben beschriebenen Weise ausgeführt.

Die vorliegende Erfindung ist weiterhin auf ein Verfahren zum Inspizieren von Behältnisverschlüssen gerichtet, wobei zu untersuchende Behältnisverschlüsse an einer Beleuchtungseinrichtung und unterhalb derselben vorbeigeführt und von der Beleuchtungseinrichtung beleuchtet werden, wobei das von der Beleuchtungseinrichtung auf die Behältnisverschlüsse eingestrahlte und von den Behältnisverschlüssen zurückgeworfene Licht wenigstens teilweise von einer oberhalb der Behältnisverschlüsse angeordneten Bildaufnahmeeinrichtung aufgenommen wird und die Bildaufnahmeeinrichtung ein ortsaufgelöstes Bild der Behältnisverschlüsse ausgibt. Erfindungsgemäß ist der Minimalabstand zwischen der Bildaufnahmeeinrichtung und den Behältnisverschlüssen geringer als die zehnfache Höhe der Behältnisverschlüsse und die Bildaufnahmeeinrichtung bildet die Behältnisverschlüsse mittels eines Objektivs ab, welches eine Brennweite aufweist, die unter 10 mm liegt. Bevorzugt liegt die Brennweite des Objektivs unter 5 mm, besonders bevorzugt unter 4 mm und besonders bevorzugt ist der Abstand zwischen den Behältnisverschlüssen und der Bildaufnahmeeinrichtung kleiner als 40 mm und besonders bevorzugt kleiner als 30 mm.

Bei einem vorteilhaften Verfahren nimmt die Bildaufnahmeeinrichtung zu einem Zeitpunkt ein Bild von den Behältnisverschlüssen auf, zu dem sich die Behältnisverschlüsse direkt unterhalb der Bildaufnahmeeinrichtung befinden.

Weitere Vorteile und Ausführungsformen ergeben sich aus den beigefügten Zeichnungen:
Darin zeigen:
- Fig. 1: eine perspektivische Darstellung einer erfindungsgemäßen Inspektionsvorrichtung;
- Fig. 2: eine Seitenansicht der Inspektionsvorrichtung aus Fig. 1;
- Fig. 3: eine Detailansicht der Inspektionsvorrichtung aus Fig. 1;
- Fig. 4: eine Draufsicht auf eine erfindungsgemäße Anordnung zum Inspizieren von Behältnisverschlüssen;
- Fig. 5: die Darstellung aus Fig. 4 mit weiteren Details;
- Fig. 6: eine erfindungsgemäße Anordnung ohne die Vorrichtung zum Inspizieren von Behältnisverschlüssen; und
- Fig. 7: eine Detailansicht der Vorrichtung aus Fig. 6.

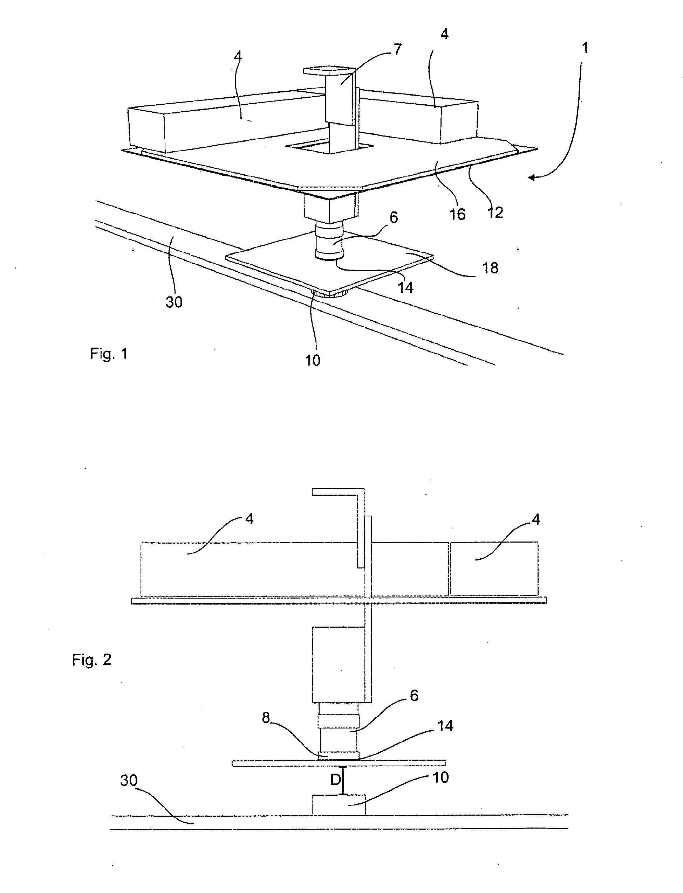

Fig. 1 zeigt eine schematische Darstellung einer erfindungsgemäßen Vorrichtung 1 zum Inspizieren von Behältnisverschlüssen 10. Diese Behältnisverschlüsse werden dabei auf einer nur schematisch dargestellten Transporteinrichtung 30 an der Vorrichtung 1 vorbeigeführt.

Die Vorrichtung 1 weist mehrere Beleuchtungseinrichtungen 4 auf, wobei hier jedoch lediglich zwei Beleuchtungseinrichtungen 4 dargestellt sind. Diese Beleuchtungseinrichtungen 4 sind hier als quaderförmige Elemente ausgebildet, die in Umfangsrichtung um die Bildaufnahmeeinrichtung 2 bzw. eine Kamera 6, angeordnet sind. Damit ist die erfindungsgemäße Vorrichtung 1 zu dem Zweck gedacht, die Behältnisverschlüsse von oben zu inspizieren. Unterhalb der Beleuchtungseinrichtungen 4 ist eine Fresnellinse 16 angeordnet und unterhalb dieser Fresnellinse 16 wiederum eine erste Polarisationsfiltereinrichtung 12. Diese Fresnellinse 16 bewirkt, dass das von den Beleuchtungseinrichtungen 4 ausgestrahlte Licht durch eine Glasplatte 18 auf die Behältnisverschlüsse 10 ausgestrahlt, d. h. entsprechend stark gebeugt wird. Dabei wird besonders bevorzugt zur Beobachtung der Behältnisverschlüsse 10 gerichtete Strahlung bzw. gerichtetes Licht verwendet. Das von dem Behältnisverschluss 10 reflektierte bzw. zurückgeworfene Licht wird über eine zweite Polarisationsfiltereinrichtung 14 auf die Bildaufnahmeeinrichtung 2 geleitet. Die Bildaufnahmeeinrichtung 2 ist wiederum an einem Träger 7 angeordnet und weist neben der Kamera 6 auch ein Objektiv 8 und die zweite Polarisationseinrichtung 14 auf.

Fig. 2 zeigt eine Seitenansicht der in Fig. 1 gezeigten Vorrichtung 1. Das Bezugszeichen 8 bezieht sich dabei auf ein Objektiv für die Bildaufnahmeeinrichtung 2. Bei diesem Objektiv handelt es sich um ein Weitwinkelobjektiv, das erfindungsgemäß möglichst nahe an die Behältnisverschlüsse 10 herangeführt wird. Auf diese Weise sind auch die Seitenwände der Behältnisverschlüsse 10 gut zu erkennen. Besonders bevorzugt wird ein Standardobjektiv mit einer Brennweite von 3,5 mm verwendet.

Da, wie eingangs erwähnt, Reflexe von dem Behältnisverschluss 10 und (nicht gezeigten) Führungen unterdrückt werden sollen, wird polarisiertes Licht verwendet und die damit eventuell einhergehenden Lichtverluste werden in Kauf genommen bzw. mit einer entsprechend stärkeren Lichtquelle 4 ausgeglichen. Dabei ist zu berücksichtigen, dass an den Behältnisverschlüssen 10 Reflexe entstehen, die nicht für jeden Behältnisverschluss konstant sind und dabei ebenfalls unterdrückt werden sollten.

Bevorzugt wird je nach dem zu untersuchenden Behältnisverschluss zwischen dem Hintergrund der Beobachtung und dem Behältnisverschluss 10 selbst ein möglichst starker Kontrast erreicht. Bevorzugt ist der (in Fig. 2 nicht dargestellte) Hintergrund unstrukturiert und einfarbig. Um auch starke Farbvarianten, d. h. Behältnisverschlüsse 10 mit unterschiedlichen Farben verarbeiten zu können, ist dieser Hintergrund besonders bevorzugt sortenabhängig austauschbar, d. h. bei Behältnisverschlüssen 10 mit einer hellen Färbung wird vorzugsweise ein dunkler Hintergrund verwendet und bei Behältnisverschlüssen 10 mit dunkler Färbung besonders bevorzugt ein heller Hintergrund.

Insbesondere für die Untersuchung von schwarzen Behältnisverschlüssen 10 ist es weiterhin erforderlich, beispielsweise von außen eindringendes Fremdlicht zu reduzieren.

Bevorzugt wäre es möglich, die Behältnisverschlüsse 10 ohne Führungselemente wie Stangen beispielsweise auf einem Förderband zu bewegen. Auf diese Weise könnte ein optimaler Hintergrund erzielt werden. Eine derartige Förderungsart bietet sich jedoch nur bei breiten bzw. flachen Behältnisverschlüssen an. Im Folgenden wird eine erfindungsgemäße Anordnung dargestellt, die die Vermeidung allzu hoher Reflexe kombiniert mit einer Möglichkeit, auch verschiedenste Behältnisverschlüsse 10 zu transportieren.

Die Beleuchtungseinrichtung 4 gibt besonders bevorzugt RGB-Weißlicht ab. Zur Aufnahme wird, wie oben erwähnt, eine Farbkamera 6 eingesetzt. Die Kombination dieser Vorgehensweisen erlaubt, dass die unterschiedlichsten Behältnisverschlüsse 10 inspiziert werden können, wobei die von der Kamera 6 ausgegebene Farbinformation die Erkennungsqualität erhöht und auch verschiedenfarbige Behältnisverschlüsse 10 identifiziert werden können.

Weiterhin sollte eine möglichst starke Beleuchtung vorgesehen werden, da die typischen Bildauflösungen von 0,1 mm pro Pixel und die Geschwindigkeiten, die zwischen ein und zwei m/s betragen, eine Belichtungszeit erfordern, die unter 200 µs und besonders bevorzugt im Bereich von 100 µs liegt. Eine weitere Schwächung des verwendeten Lichts tritt, wie oben erwähnt, durch die Polarisierung desselben ein. Das Bezugszeichen D bezieht sich auf den Abstand zwischen der Bildaufnahmeeinrichtung und dem Behältnisverschluss 10.

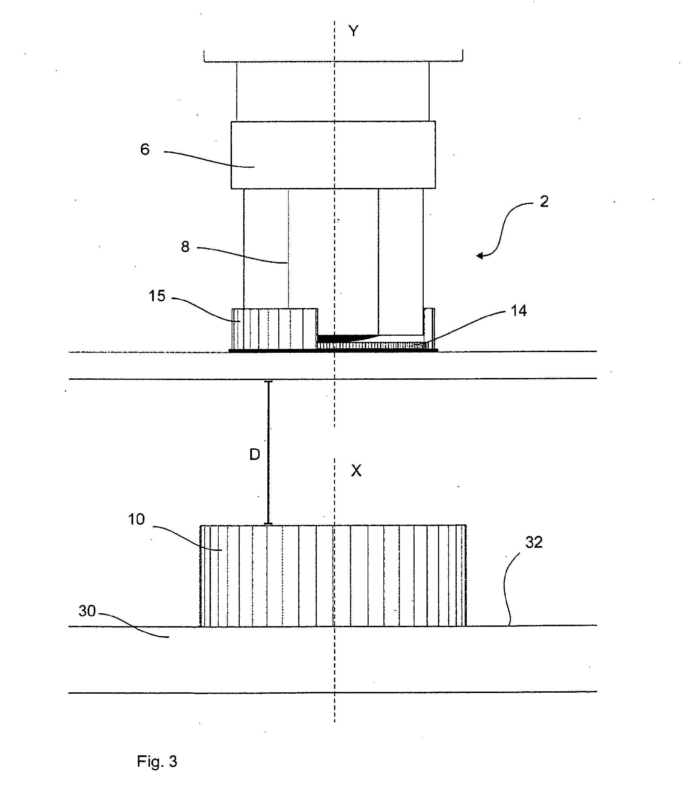

Fig. 3 zeigt eine Detailansicht einer erfindungsgemäßen Inspektionsvorrichtung 1. Dabei wird der Behältnisverschluss 10 auf einer Transporteinrichtung 30 mit einem Hintergrund 32 geführt. Sobald der Behältnisverschluss 10 exakt unter der Bildaufnahmeeinrichtung 2 angeordnet ist kann eine Aufnahme des Behältnisverschlusses 10 gemacht werden. Unter genau unterhalb wird dabei verstanden, dass die Symmetrieachse X des Behältnisverschlusses und die Symmetrieachse Y der Bildaufnahmeeinrichtung 2 im Wesentlichen zusammenfallen sollten. Das Bezugszeichen 15 bezieht sich auf einen Drehring, mit dem die Polarisationsfiltereinrichtung 14 um die Achse Y gedreht werden kann, um auf diese Weise Reflexe möglichst weitgehend zu verhindern. Das Bezugszeichen 8 kennzeichnet das Objektiv, um den Behältnisverschluss 10 auf die Bildaufnahmeeinrichtung bzw. die Kamera 6 abzubilden.

Um zu erreichen, dass der Behältnisverschluss 10 in dem Moment abgebildet wird, in dem er direkt unter der Bildaufnahmeeinrichtung 2 befindlich ist, sollte bevorzugt eine seitliche Führung für die Behältnisverschlüsse 10 vorgesehen sein, die nur geringe Toleranzen zulässt. Bevorzugt sollten die Behältnisverschlüsse innerhalb eines Toleranzbereichs von maximal 2 mm und bevorzugt von 1 mm bezüglich der Mittellage positioniert sein, da sich durch den geringen Abstand zwischen der Bildaufnahmeeinrichtung 2 und den Behältnisverschlüssen 10 starke Verzerrungen an den Rändern ergeben. Weiterhin sollte bevorzugt darauf geachtet werden, dass die einzelnen Behältnisverschlüsse untereinander einen hinreichend großen Abstand aufweisen, sodass die Behältnisverschlüsse 10 von allen Seiten beleuchtet werden können.

Die Bildaufnahmeeinrichtung 2 ist für eine Beobachtung von oben für Ovalitäts-, Garantiebands-, Dichtungs-, Fremdverschluss und die verkehrte Lageinspektion vorgesehen. Mithilfe einer weitern (nicht gezeigten) Bildaufnahmeeinrichtung mit Seitenansicht kann beispielsweise die Höhe des Behältnisverschlusses sowie zusätzliche Kappen inspiziert werden. Weiterhin wäre es auch möglich, die erfindungsgemäße Inspektionsvorrichtung durch weitere Bildaufnahmeeinrichtung zu verfeinern.

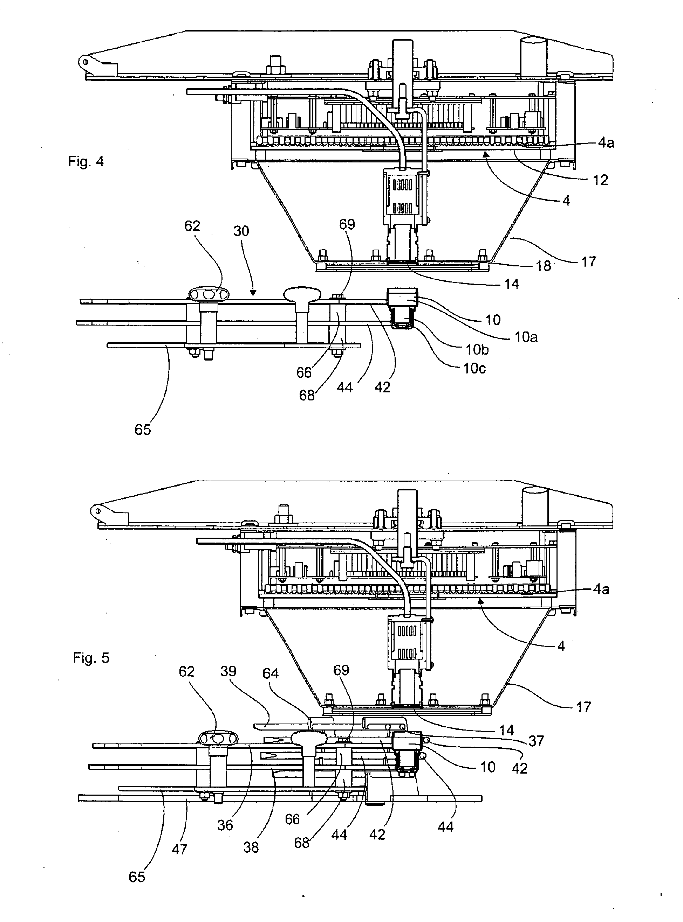

Fig. 4 zeigt eine Seitenansicht einer erfindungsgemäße Vorrichtung 1 zum Inspizieren des Behältnisverschlusses 10. Dieser Behältnisverschluss 10 weist einen Hauptkörper 10a auf, in dem auch ein Gewinde zum Aufschrauben auf ein Behältnis vorgesehen ist sowie einen zylinderförmigen Fortsatz 10b, über den wiederum eine Schutzkappe 10c angeordnet ist. Die erfindungsgemäße Vorrichtung 1 zum Inspizieren ist in ihrer Gesamtheit in einem Gehäuse 17 angeordnet, um Fremdlicht von außen zu verhindern. Die Beleuchtungseinrichtung 4 weist eine Vielzahl von Lichtquellen 4a in Form von LEDs auf. Das Bezugszeichen 16 bezieht sich hier wieder auf die Fresnellinse und das Bezugszeichen 12 auf die erste Polarisationsfiltereinrichtung. Man erkennt, dass die Bildaufnahmeeinrichtung 2 zentral innerhalb des Gehäuses 17 angeordnet ist. Die Glasplatte 18 dient zum Schutz der Vorrichtung 1 zum Inspizieren von Behältnisverschlüssen 10.

Das Bezugszeichen 30 kennzeichnet eine Transporteinrichtung, mittels derer die Behältnisverschlüsse 10 zugeführt werden. Diese Transporteinrichtung weist zwei Führungsträger in Form von Sägezahnringen 42 und 44 auf, die parallel zueinander sind und die, wie unten genauer erläutet, die einzelnen Behältnisverschlüsse 10 führen. Das Bezugszeichen 65 bezieht sich auf eine angetriebene Sternscheibe, die mit den beiden oben erwähnten Sägezähneringen 42 und 44 über Schraubverbindungen 69 mit Distanzhülsen 66 und 68 verbunden ist. Diese Sternscheibe 65 wird angetrieben und damit auch die beiden oben erwähnten Sägezähneringe 42 und 44. Es wird darauf hingewiesen, dass die angetriebene Sternscheibe 65 nicht in demjenigen Bereich angeordnet ist, in dem die Inspektion der Behältnisverschlüsse 10 stattfindet. Das Bezugszeichen 62 bezieht sich auf einen Drehgriff zum manuellen Anschrauben des vollständigen Sägezahnsystems an einer in Fig. 4 nicht dargestellten angetriebenen Treibscheibe.

Fig. 5 zeigt die Darstellung aus Fig. 4 mit weiteren Details. Man erkennt hier, dass die Sägezähneringe 42 und 44 auch jeweils auf der rechten Seite bezüglich des Behältnisverschlusses 10 angeordnet sind. Oberhalb des Behältnisverschlusses 10 sind zwei Führungsstangen 37, 39 vorgesehen, die zur Führung der Behältnisverschlüsse 10 dienen. Diese Führungsstangen 37, 39 werden von radial verlaufenden Trägern 64 gehalten. Dabei wird darauf hingewiesen, dass die Führungsstangen 37, 39 auch in dem Bereich der eigentlichen Inspektion der Behältnisverschlüsse nicht vorgesehen sind.

Die Bezugszeichen 36 und 38 beziehen sich ebenfalls auf Führungsstangen, wobei die untere Führungsstange 38 an dem Fortsatz 10b des Behältnisverschlusses 10 und die obere Führungsstange 36 an dem Hauptkörper 10a des Behältnisverschlusses 10 anliegt.

Es wird darauf hingewiesen, dass die einzelnen Sägezahnringe auswechselbar sind und mithilfe der oben erwähnten Schraubverschlüsse 69 gelöst werden können, um die Vorrichtung auch auf unterschiedliche Formen der Behältnisverschlüsse 10 anzupassen. Das Bezugszeichen 47 bezieht sich auf eine Tragplatte für die oben erwähnten radial nach innen verlaufenden Träger 64. Diese Tragplatte 47 ist mit den Trägern 64 gemeinsam auswechselbar.

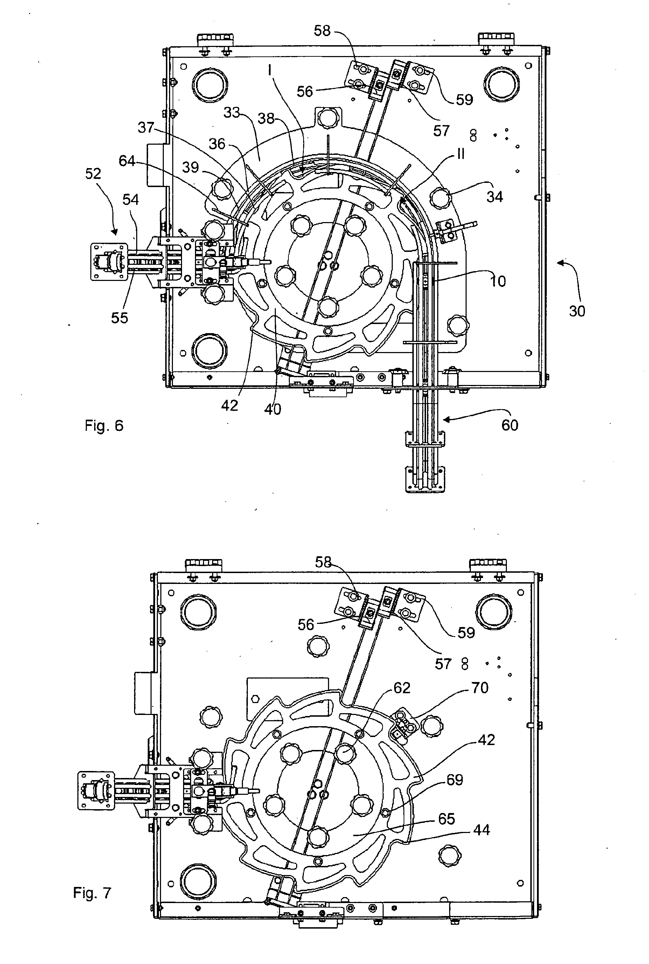

Fig. 6 zeigt eine Draufsicht auf eine erfindungsgemäße Transporteinrichtung 30, wobei hier zur besseren Übersichtlichkeit die eigentliche Inspektionsvorrichtung 1 weggelassen wurde. Diese Inspektionsvorrichtung 1 wäre in dem mit I gekennzeichneten Bereich vorgesehen, in dem die beiden Führungsstangen 37 und 39 unterbrochen sind. Das Bezugszeichen 52 bezieht sich auf eine Zuführeinrichtung, mit der der Transporteinrichtung 30 die Behältnisverschlüsse zugeführt werden. Diese Zuführeinrichtung 52 weist eine Vielzahl von Führungsstangen auf, von denen nur zwei Führungsstangen mit den Bezugszeichen 54 und 55 gekennzeichnet sind. Die Bezugszeichen 56 und 57 beziehen sich auf Lichtschrankenelemente, die die Behältnisverschlüsse daraufhin untersuchen, ob auch die Schutzkappe 10c vorhanden ist. Diese Lichtschrankeneinheiten 56 und 57 können in Langlöchern 58, 59 verschoben werden, um auf diese Weise die Vorrichtung an unterschiedliche Durchmesser von Schutzkappen 10c anzupassen. Die Platte 33 ist mithilfe von lösbaren Drehgriffen 34 auswechselbar.

Das Bezugszeichen 42 kennzeichnet auch hier wieder den Sägezahnring, der zur Beförderung der Behältnisverschlüsse 10 in Fig. 6 im Uhrzeigersinn gedreht wird. Nach der vollständigen Inspektion der Behältnisverschlüsse werden diese über eine Ausschleusvorrichtung 60, die wiederum eine Vielzahl von Führungsstangen aufweist, abgeführt. Fehlerhafte Behältnisverschlüsse können in einem Bereich II ausgesondert werden, indem sie beispielsweise nach oben weggeblasen werden. Zu diesem Zweck sind auch hier die Führungsstangen 37, 39 unterbrochen.

Fig. 7 zeigt eine Darstellung bei der zur besseren Veranschaulichung einige Details entfernt wurden. Man erkennt, dass die angetriebene Sternscheibe 65 über die Schraubverbindungen 69 mit den beiden Sägezahnringen 42 und 44 verbunden ist. Da die beiden Sägezahnringe 42 und 44 übereinander angeordnet sind, ist an dem unten liegenden Sägezahn 44 nur ein kleiner Abschnitt zu erkennen. Der Flächenunterschied dieser beiden Sägezahnringe 42 und 44 ergibt sich daraus, dass der untere Sägezahnring 44 nicht an dem Grundkörper 10a des Behältnisverschlusses angreift, sondern an dem Fortsatz 10b. Man erkennt, dass die Sägezahnringe eine Vielzahl von Sägezähnen aufweisen, wobei diese Sägezähne jeweils Krümmungen 42a bzw. 44a aufweisen, die bevorzugt an die Krümmungen der Behältnisverschlüsse 10 angepasst sind. Auf diese Weise kann der Behältnisverschluss sehr exakt bezüglich der (nicht gezeigten) Inspektionsvorrichtung 1 und auch bezüglich der Lichtschrankeneinheiten 56, 57 positioniert werden.

Das Bezugszeichen 70 bezieht sich auf eine Auswurfeinheit zum Aussondern von fehlerhaften Behältnisverschlüssen.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Inspektionsvorrichtung (1) zum Untersuchen von Behältnisverschlüssen (10) mit einer Beleuchtungseinrichtung (4) die oberhalb der zu untersuchenden Behältnisverschlüsse (10) angeordnet ist, und die Behältnisverschlüsse beleuchtet, mit einer oberhalb der zu untersuchenden Behältnisverschlüsse (10) angeordneten Bildaufnahmeeinrichtung (2) die von der Beleuchtungseinrichtung (4) auf die Behältnisverschlüsse (10) gerichtete und von den Behältnisverschlüssen (10) zurückgeworfene Strahlung aufnimmt, und ein ortsaufgelöstes Bild der Behältnisverschlüsse (10) ausgibt,
**dadurch gekennzeichnet, dass** der Abstand zwischen der Bildaufnahmeeinrichtung (2) und dem zu untersuchenden Behältnisverschluss geringer ist als die vierfache Höhe des Behältnisverschlusses (10) und dass die Bildaufnahmeeinrichtung ein Objektiv (8) aufweist, eine Brennweite von weniger als 10mm aufweist.

2. Inspektionsvorrichtung (1) nach Anspruch 1,
**dadurch gekennzeichnet, dass** die Inspektionsvorrichtung eine Steuerungseinrichtung aufweist, die bewirkt, dass die die Bildaufnahmeeinrichtung in demjenigen Zeitpunkt ein Bild von dem Behältnisverschluss (10) aufnimmt, in dem der Behältnisverschluss direkt unterhalb der Bildaufnahmeeinrichtung (2) angeordnet ist.

3. Inspektionsvorrichtung (1) nach dem Oberbegriff von Anspruch 1,
**dadurch gekennzeichnet, dass** in dem Strahlengang zwischen der Beleuchtungseinrichtung (4) und dem Behältnisverschluss (10) eine erste Polarisationsfiltereinrichtung (12) angeordnet ist.

4. Inspektionsvorrichtung (1) nach dem Oberbegriff von Anspruch 1,
**dadurch gekennzeichnet, dass** in dem Strahlengang zwischen dem Behältnisverschluss (10) und der Bildaufnahmeeinrichtung eine zweite Polarisationsfiltereinrichtung (14) vorgesehen ist.

5. Inspektionsvorrichtung (1) nach wenigstens einem der vorangegangenen Ansprüche,
**dadurch gekennzeichnet, dass** die zweite Polarisationsrichtung (14) verstellbar ist.

6. Inspektionsvorrichtung nach wenigstens einem der vorangegangenen Ansprüche,
**dadurch gekennzeichnet, dass** in dem Strahlengang zwischen der Beleuchtungseinrichtung (4) und dem Behältnisverschluss (10) eine Fresnellinse (16) vorgesehen ist.

7. Inspektionsvorrichtung nach wenigstens einem der vorangegangenen Ansprüche,
**dadurch gekennzeichnet, dass** die Beleuchtungseinrichtung (4) eine Vielzahl von Lichtquellen (4a) aufweist, die in Umfangsrichtung um die Bildaufnahmeeinrichtung (2) angeordnet sind.

8. Inspektionsvorrichtung nach wenigstens einem der vorangegangenen Ansprüche,
**dadurch gekennzeichnet, dass** unterhalb der Behältnisverschlüsse (10) eine strukturlose Hintergrundfläche (32) angeordnet ist.

9. Inspektionsanordnung für Behältnisverschlüsse (10) mit wenigstens einer Inspektionsvorrichtung (1) nach wenigstens einem der vorangegangenen Ansprüche und einer Transporteinrichtung (30) welche die Behältnisverschlüsse gegenüber der Inspektionsvorrichtung (1) bewegt.

10. Inspektionsanordnung nach Anspruch 9,
**dadurch gekennzeichnet, dass** die Inspektionsanordnung eine Führungsschiene (37, 39) aufweist, entlang derer die Behältnisverschlüsse (10) vereinzelt geführt werden.

11. Inspektionsanordnung (30) nach Anspruch 9,
**dadurch gekennzeichnet, dass** die Inspektionsanordnung (30) wenigstens einen Führungsträger (42, 44) aufweist, der wenigstens zeitweise an unterschiedlichen Bereichen des Behältnisverschlusses (10) anliegt.

12. Inspektionsanordnung (30) nach Anspruch 11,
**dadurch gekennzeichnet, dass** die Führungsträger (42, 44) schwarz gefärbt sind.

13. Inspektionsanordnung (30) mit einer Inspektionsvorrichtung nach dem Oberbegriff von Anspruch 1,
**dadurch gekennzeichnet, dass** die Inspektionsanordnung (20) eine Transporteinrichtung (30) aufweist, welche die Behältnisverschlüsse vereinzelt gegenüber der Inspektionsvorrichtung (1) bewegt.

14. Verfahren zum Inspizieren von Behältnisverschlüssen (10), wobei zu untersuchende Behältnisverschlüsse (10) an einer Beleuchtungseinrichtung (4) und unterhalb derselben vorbeigeführt werden und von der Beleuchtungseinrichtung (4) beleuchtet werden und wobei das von der Beleuchtungseinrichtung (4) auf die Behältnisverschlüsse eingestrahlte und von den Behältnisverschlüssen (10) zurückgeworfene Licht wenigstens teilweise von einer oberhalb der Behältnisverschlüsse (10) angeordneten Bildaufnahmeeinrichtung (2) aufgenommen wird und die Bildaufnahmeeinrichtung (2) ein ortsaufgelöstes Bild der Behältnisverschlüsse (10) ausgibt,
**dadurch gekennzeichnet, dass** der Minimalabstand zwischen der Bildaufnahmeeinrichtung (8) und den Behältnisverschlüssen geringer ist als die zehnfache Höhe der Behältnisverschlüsse (10) und die Bildaufnahmeeinrichtung (2) die Behältnisverschlüsse (10) mittels eines Objektivs (8) abbildet, welches eine Brennweite aufweist, die unter 10mm liegt.

15. Verfahren nach Anspruch 13,
**dadurch gekennzeichnet, dass** die Bildaufnahmeeinrichtung (2) zu einem Zeitpunkt ein Bild von den Behältnisverschlüssen (10) aufnimmt, zu dem sich die Behältnisverschlüsse (10) direkt unterhalb der Bildaufnahmeeinrichtung (2) befinden.
